# EUROPÄISCHE PATENTANMELDUNG

(11) **EP 1 369 272 A2**
(43) Veröffentlichungstag der Anmeldung: **10.12.2003**
(21) Anmeldenummer: 03012806.0
(22) Anmeldetag: 05.06.2003
(51) Int. Cl.: B60J 5/10, B60R 5/04, B60R 9/06, B60R 19/14, B62D 25/10

(54) **Kraftfahrzeug mit einer Heckklappe**

(30) Priorität: 09.06.2002 DE 10225482
(71) Anmelder: Webasto Vehicle Systems International GmbH, 82131 Stockdorf (DE)
(72) Erfinder: De Gaillard, Francois, 85390 Mouilleron en Pareds (FR)
(74) Vertreter: Bedenbecker, Markus

(57) **Zusammenfassung**

Die Erfindung betrifft ein Kraftfahrzeug, insbesondere eine Limousine oder einen Kombi, mit einer Heckklappe (9), die am Fahrzeug mittels einer Lagereinrichtung zum Schließen und zum Freigeben einer rückseitigen Beladeöffnung (14) eines Fahrzeuginnenraums oder Kofferraums (3) bewegbar gelagert ist, wobei die Heckklappe (9) mittels der Lagereinrichtung (16, 26) in einer Senk- bzw. einer Hubbewegung zwischen ihrer Schließstellung und einer abgesenkten Offenstellung, in der sie am Fahrzeugheck (2) in im wesentlichen vertikaler Ausrichtung angeordnet ist, verstellbar ist. Die Heckklappe (9) kann um ihren Unterrand (24) nach hinten ausgeschwenkt werden, um eine Lasttragfläche zu bilden. Die ausgeschwenkte Heckklappe (9) kann in einer im wesentlichen horizontalen Ausschwenkstellung mittels der Lagereinrichtung (16, 26) in einer Senk- bzw. Hubbewegung als Hubeinrichtung für Ladegut bewegbar werden.

## Beschreibung

Die Erfindung betrifft ein Kraftfahrzeug, insbesondere eine Limousine oder einen Kombi, mit einer Heckklappe, die am Fahrzeug mittels einer Lagereinrichtung zum Schließen und zum Freigeben einer rückseitigen Beladeöffnung eines Fahrzeuginnenraums oder Kofferraums bewegbar gelagert ist. Des weiteren betrifft die Erfindung ein Kraftfahrzeug, insbesondere eine Limousine, mit einem heckseitigen Kofferraum und einer Heckklappe, die am Fahrzeug mittels einer Lagereinrichtung zum Schließen und zum Freigeben einer rückseitigen Beladeöffnung des Kofferraums bewegbar gelagert ist.

Aus der DE 196 15 540 A1 ist ein Kombi-Personenkraftwagen mit einer oberen nach oben schwenkenden Heckklappe und mit einer unteren nach unten schwenkenden Heckklappe bekannt geworden. Durch Verschwenken einer oder beider Heckklappen wird in üblicher Weise der Laderaum von der Heckseite her zugänglich. Ein vergleichbarer PKW ist auch in der US 6,227,594 B1 offenbart.

Aufgabe der Erfindung ist es, ein eingangs genanntes Kraftfahrzeug mit einer Heckklappe zu schaffen, dessen Heckbereich durch große Variabilität vielfältig nutzbar ist.

Diese Aufgabe wird erfindungsgemäß durch ein Kraftfahrzeug mit den Merkmalen des Anspruchs 1 gelöst. Da die Heckklappe mittels der Lagereinrichtung in einer Senk- bzw. einer Hubbewegung zwischen ihrer Schließstellung und einer abgesenkten Offenstellung, in der sie am Fahrzeugheck in im wesentlichen vertikaler Ausrichtung angeordnet ist, verstellbar ist, kann auch bei am Fahrzeugheck beengten Platzverhältnissen eine hintere Zugangsöffnung zum Kofferraum oder Laderaum geöffnet werden. Zusätzlich kann das Fahrzeug eine obere Heckklappe aufweisen, die nach oben aufschwenkt.

Die Aufgabe wird auch durch ein Kraftfahrzeug mit den Merkmalen des Anspruchs 2 gelöst. Bei diesem Kraftfahrzeug, bei dem eine obere Kofferraumöffnung mittels einer Abdeckeinrichtung verschließbar ist, die mehrere beidseits der Kofferraumöffnung verschiebbar gelagerte und in eine Offenstellung nach vorne verschiebbare Abdeckteile aufweist, und bei dem die Heckklappe in eine horizontale Stellung schwenkbar und mittels der Lagereinrichtung zum Anheben und Absenken von Ladegut vertikal bewegbar ist, sind die vielfältigen Nutzungsmöglichkeiten bei hoher Bedienungsfreundlichkeit besonders vorteilhaft.

Vorteilhafte Ausgestaltungen der Erfindung sind in den Unteransprüchen angegeben.

Wenn die Heckklappe um ihren Unterrand nach hinten ausschwenkbar ist, um eine Lasttragfläche zu bilden, kann die Ladefläche des Kofferraums oder Laderaums verlängert werden. Dann ist es vorteilhaft, wenn die ausgeschwenkte Heckklappe in einer im wesentlichen horizontalen Ausschwenkstellung mittels der Lagereinrichtung in einer Senk- bzw. Hubbewegung als Hubeinrichtung für Ladegut bewegbar ist. Damit lassen sich auch schwere Lasten mit deutlich geringerem Kraftaufwand auf den Kofferraumboden bzw. die Ladefläche anheben. In gleicher Weise wird das Entladen erleichtert.

Zweckmäßigerweise enthält die Lagereinrichtung eine am Fahrzeug angebrachte Vertikalführungseinrichtung für die Heckklappe, an der zumindest ein an der Heckklappe befestigtes Schwenklagerteil verschiebbar und verschwenkbar gelagert ist, wobei die Vertikalführungseinrichtung zwei Vertikalführungen aufweisen kann und jede Vertikalführung zumindest eine Führungsschiene enthält. Im Gegensatz zu Schwenkhebeleinrichtungen sind die linearen oder leicht gekrümmten Führungsschienen einfache Bauteile, die auch hohe Belastungen krümmten Führungsschienen einfache Bauteile, die auch hohe Belastungen und Kräfte bei einfachem Aufbau aufnehmen können.

Um die Heckklappe in eine dichte Schließstellung in der hinteren Kofferraumöffnung zu bringen, ist es vorteilhaft, wenn bei der Hubbewegung in einem Oberabschnitt jeder Vertikalführung die Heckklappe aufgrund eines gebogenen Bahnverlaufs in ihre Schließstellung gegen das Fahrzeugheck bewegt wird.

In einfacher Gestaltung bildet eine Rolloeinrichtung die obere Abdeckung, die auf einer vor der Kofferraumöffnung verdeckt angeordnete Wickelwelle aufwickelbar ist. Jedoch können auch andere Abdeckungen mit mehreren Abdeckelementen verwendet werden, die nach vorne in die Karosserie in eine Ablagestellung, z. B. in gestapelter Anordnung, verschiebbar sind, um die obere Kofferraumöffnung freizulegen.

Zweckmäßigerweise sind die Lamellen der Rolloeinrichtung bzw. die Abdeckteile der Abdeckung an beidseits der oberen Kofferraumöffnung angeordneten Führungen geführt und an den Führungen sind Hubleisten vorgesehen, die von unten nach oben gegen die Lamellen bzw. die Abdeckteile ausfahrbar sind, um diese gegen einen Lagerabschnitt der jeweiligen Führung zu drücken. Damit werden Klappergeräusche vermieden und eine Wölbung der Lamellen kann erzeugt werden, so daß Wasser auf den Lamellen seitlich einfacher abfließen kann.

Nachfolgend wird ein Ausführungsbeispiel des Kraftfahrzeugs unter Bezugnahme auf die Zeichnung näher erläutert. Es zeigt:
- Fig. 1: in perspektivischen Heckansichten in den Darstellungen 1.1 bis 1.4 einen Personenkraftwagen in unterschiedlichen Öffnungs- und Nutzungszuständen des Fahrzeughecks;
- Fig. 2: in seitlichen Ansichten in den Darstellungen 2.1 bis 2.6 das Heck des Personenkraftwagens in unterschiedlichen Öffnungs- und Nutzungszuständen;
- Fig. 3: in einer perspektivischen Draufsicht eine Heckklappe mit Lager- und Antriebseinrichtungen;
- Fig. 4: in einer perspektivischen Draufsicht die Innenseite der geschlossenen Heckklappe mit Lager- und Antriebseinrichtungen;
- Fig. 5.1: in einer Seitenansicht das Fahrzeugheck mit Darstellung der geschlossenen und der geöffneten Heckklappe;
- Fig. 5.2: in einer Seitenansicht die Heckklappe in Schließstellung und in einer abgesenkten Offenstellung;
- Fig. 6.1: in einer perspektivischen Draufsicht das Fahrzeugheck mit einer Rolloeinrichtung zum Abdecken der oberen Kofferraumöffnung;
- Fig. 6.2: in einer perspektivischen Draufsicht das Fahrzeugheck mit geschlossener Rolloeinrichtung;
- Fig. 6.3: in einer Seitenansicht eine Hubeinrichtung für die Rolloeinrichtung;
- Fig. 6.4: in einer Querschnittansicht eine seitliche Führung und die Hubeinrichtung für die Rolbeinrichtung;

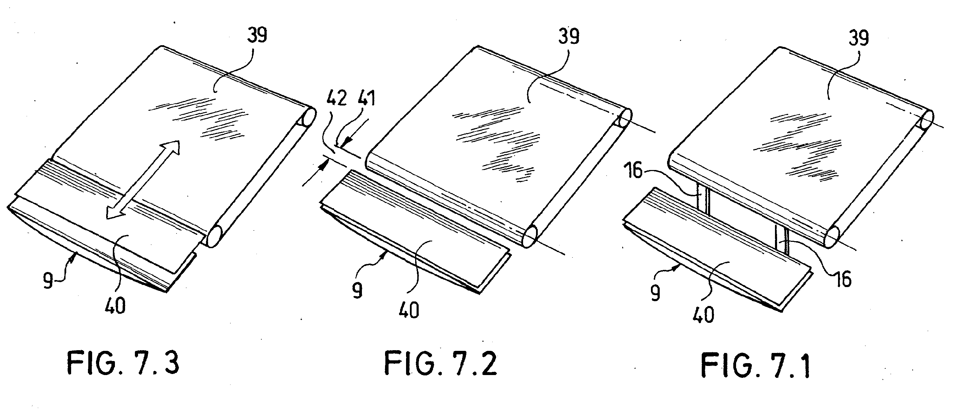

- Fig. 7: in perspektivischer Draufsicht in den Darstellungen 7.1 bis 7.3 unterschiedliche Stellungen der Heckklappe relativ zum Kofferraumboden; und
- Fig. 8: in perspektivischer Draufsicht eine bewegbaren Ladeboden an der Innenseite der Heckklappe.

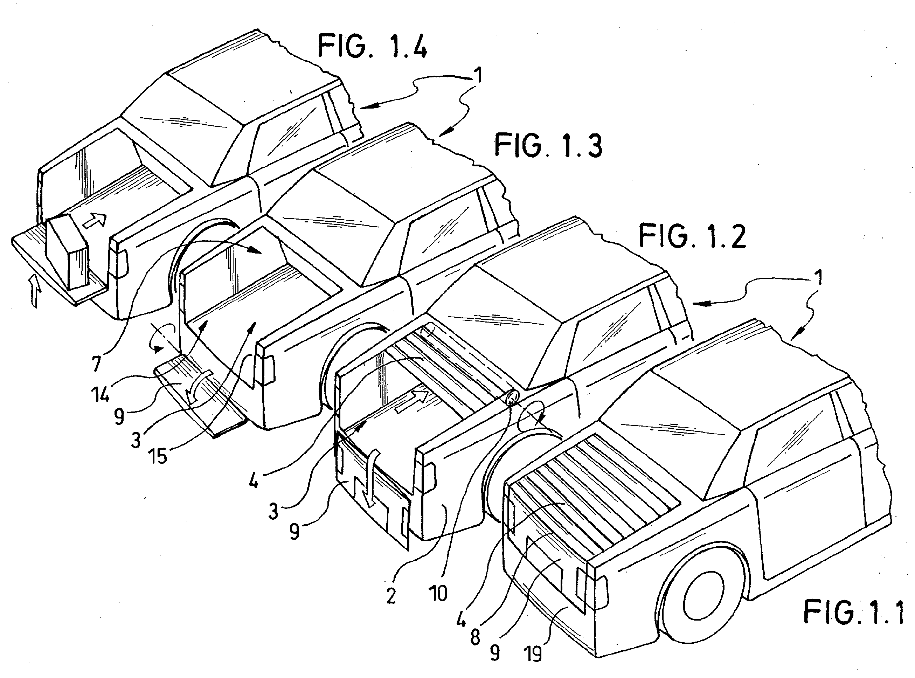

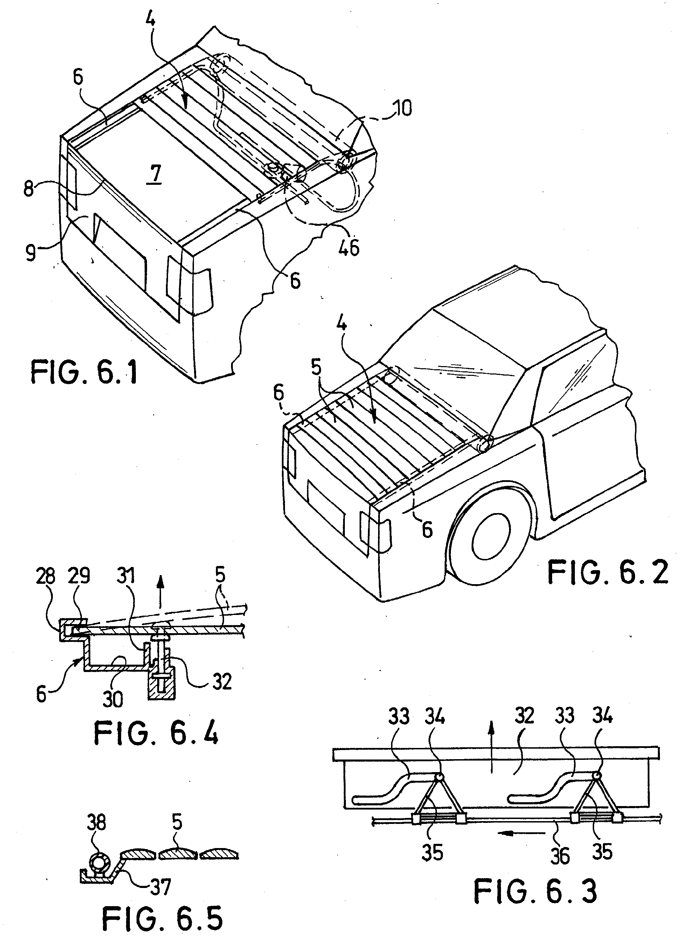

Ein Personenkraftwagen 1, beispielsweise eine Stufenhecklimousine (siehe z. B. Fig. 1.1-1.4), weist im Fahrzeugheck 2 einen Kofferraum 3 auf. Der Kofferraum 3 enthält als obere Abdeckung ein Rollo 4, dessen Lamellen 5 an zwei Führungsschienen 6 verschiebbar gelagert sind, die beidseits einer oberen Kofferraumöffnung 7 (siehe Fig. 6.1) angeordnet sind, so daß das Rollo 4 aus seiner Schließstellung, in der es an einen Oberrand 8 einer geschlossenen Heckklappe 9 angrenzt, über beliebige Zwischenstellungen (Fig. 1.2) nach vorne in seine Offenstellung verfahren werden kann (Fig. 1.3). Beim Öffnen des Rollos 4 werden die Lamellen 5 auf einer Wickelwelle 10 aufgewickelt, die hinter den Lehnen 11 der Rücksitze 12 unter einer Verkleidung oder Hutablage 13 angeordnet ist.

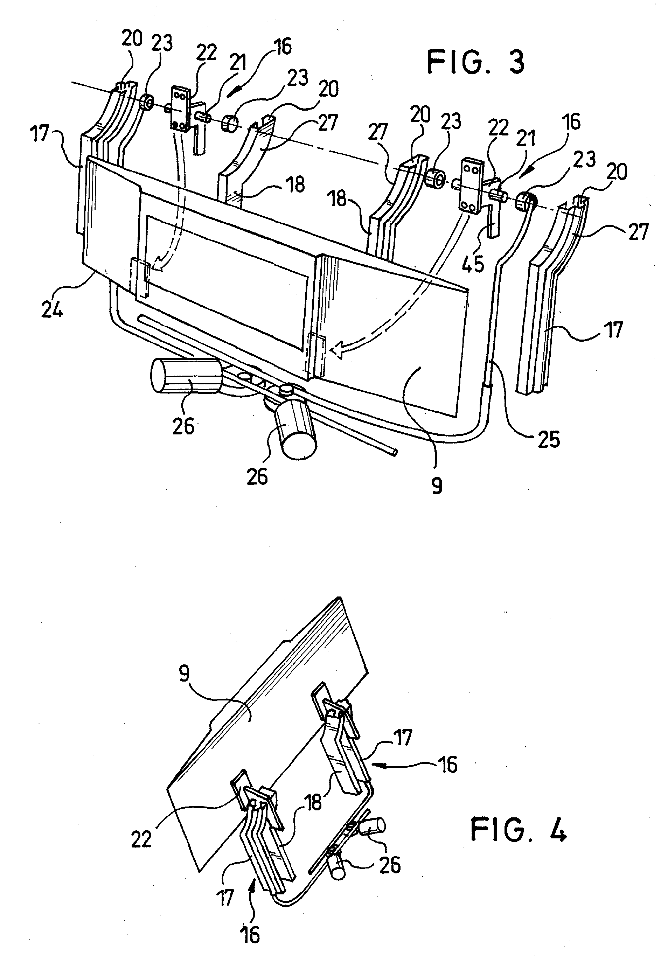

Die Heckklappe 9 verschließt eine rückseitige Kofferraumöffnung 14, die sich in etwa bis zu einem Boden 15 des Kofferraums 3 erstreckt, und ist in Schließstellung im wesentlichen vertikal oder gegenüber der Vertikalen leicht geneigt angeordnet. Die Heckklappe 9 ist mittels einer Lagereinrichtung, die zwei am Fahrzeugheck 2 angeordnete Vertikalführungseinrichtungen 16 (Fig. 3 und 4) aufweist, bewegbar gelagert. Jede Vertikalführungseinrichtung 16 weist zwei benachbarte Führungsschienen 17 und 18 auf, die an der Innenseite einer unterhalb der rückseitigen Kofferraumöffnung 14 verlaufenden festen Heckwand 19 des Fahrzeugs 1 angeordnet sind und gegeneinander gerichtete Führungsnuten oder -bahnen 20 aufweisen, in denen eine Schwenkachse 21 eines Lagerteils 22 über Gleitschuhe 23 verschiebbar geführt ist. Das Lagerteil 22 ist an der Innenseite der Heckklappe 9 im Bereich ihres Unterrandes 24 befestigt und erstreckt sich durch eine schlitzförmige Öffnung (nicht dargestellt) in der Heckwand 19.

Die Schwenkachse 21 bzw. der Gleitschuh 23 ist mit einem Antriebskabel 25 verbunden, das von einer Antriebseinheit mit einem oder mit zwei Antriebsmotoren 26 antreibbar ist. Der bzw. die Antriebsmotoren 26 sind an der Karosserie gelagert. .

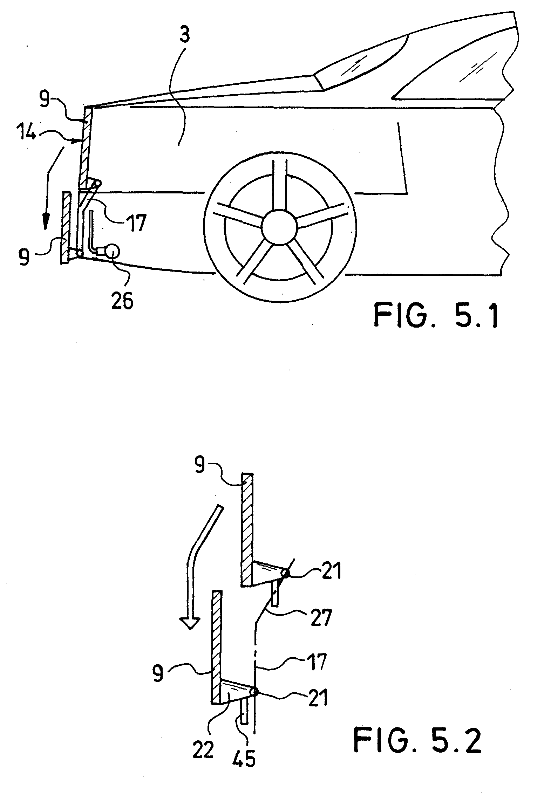

Die Führungsschienen 17 und 18 weisen jeweils einen von der Heckseite in Fahrzeuglängsrichtung nach vorne verlaufenden oberen Abschnitt 27 auf, der derart geformt ist, daß bei einer Hubbewegung in den oberen Abschnitt 27 das Lagerteil 22 nach vorne bewegt wird und damit die Heckklappe 9 in eine dichte Verschlußstellung (Fig. 5.1 und 5.2) gegen die die rückseitige Kofferraumöffnung 14 umgebende Karosserie gedrückt wird.

Die seitlichen Führungsschienen 6 für die z. B. aus Aluminium gebildeten Lamellen 5 des Rollos 4 des Kofferraums 3 enthalten einen U-förmigen Lagerabschnitt 28 (Fig. 6.4) zur Führung der außenseitigen Enden 29 der Lamellen 5 und unterhalb des U-förmigen Lagerabschnitts 28 eine Wasserrinne 30 mit einem innenseitigen hochstehenden Steg 31. Daneben ist eine über die Länge der Führungsschiene 6 verlaufende Hubschiene 32 angeordnet, die in vertikaler Richtung anhebbar und absenkbar ist, in Längsrichtung jedoch festgelegt sein kann. Das Anheben bzw. Absenken der Hubschiene 32 erfolgt mittels zweier voneinander beabstandeter Kulissenführungen 33 (siehe Fig. 6.3), an denen zwei Zapfen 34 verschiebbar aufgenommen sind, die an Trägerteilen 35 befestigt sind, die an der Führungsschiene 6 verschiebbar gelagert sind und mit einem Antriebskabel 36 verbunden sind, so daß sie gleichzeitig angehoben wie auch abgesenkt werden können. Auf diese Weise können die Lamellen 5 im Schließzustand oder im Teilöffnungszustand im Lagerabschnitt 28 der Führungsschiene 6 nach oben gedrückt werden, so daß Klappergeräusche vermieden werden können. Des weiteren werden die Lamellen 5 dabei nach oben gewölbt, so daß Wasser seitlich zu den Führungsschienen 6 und in die Wasserrinnen 30 ablaufen kann. Am Hinterrand der letzten Lamelle 5 (Fig. 6.5) ist eine Regenrinne 37 mit einer Dichtung 38 vorgesehen, die mit dem Oberrand 8 der geschlossenen Heckklappe 9 in abdichtenden Eingriff gebracht wird.

Der Boden 15 des Kofferraums 3 ist in vorzugsweiser Gestaltung als Schiebeoder Gleitladeboden 39 gebildet, z. B. in Form einer umlaufenden flexiblen Struktur, der auf einer festen Bodenfläche gleitend in Längsrichtung verschoben werden kann.

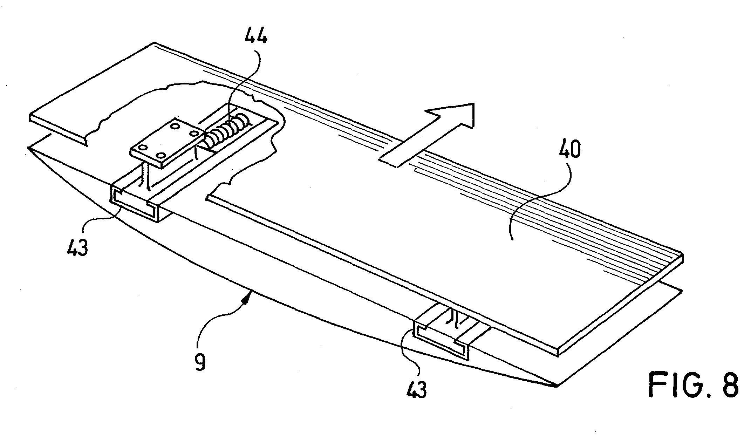

Des weiteren kann an der Innenseite der Heckklappe 9 ein Gleitladeboden 40 angeordnet sein. Wenn die Heckklappe 9 in ihre horizontale Stellung herabgeklappt ist, ist sie vom Hinterrand 41 des Kofferraumbodens 15 bzw. des Gleitladebodens 40 beabstandet. Um diesen Spalt 42 zu überbrücken, wird der an Führungsschienen 43 (siehe Fig. 8) gelagerte Gleitladeboden 40 gegen die Kraft einer jeweiligen Feder 44 nach vorne zum Kofferraumboden 15 bzw. Gleitladeboden 40 verschoben.

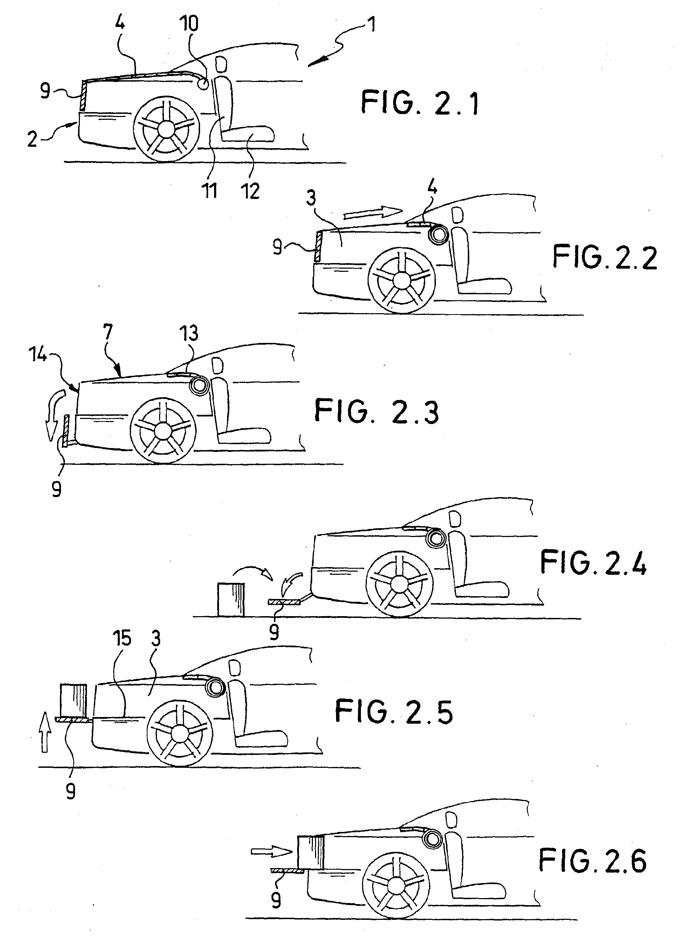

Aus der Stellung mit geschlossener Heckklappe 9 und geschlossenem Rollo (Fig. 1.1 und 2.1) kann das Rollo 4 mittels einer Antriebseinrichtung 46 teilweise oder gänzlich nach vorne verfahren werden, um die obere Kofferraumöffnung 7 entsprechend zu öffnen. Des weiteren kann die Heckklappe 9 bei geschlossenem wie auch bei geöffnetem Rollo 4 abgesenkt werden, um die hintere Kofferraumöffnung 14 alleine oder durchgehend mit der oberen Kofferraumöffnung 7 zu öffnen. Bei geschlossenem Rollo 4 ist durch das Absenken der Heckklappe 9 der Kofferraum 3 ebenfalls zugänglich. Dabei erfordert das vertikale Absenken der Heckklappe 9 wenig Platz hinter dem Fahrzeugheck 2 und ist somit bei beengtem Parken vorteilhaft.

Die abgesenkte Heckklappe 9 wird durch Verschwenken, das durch motorischen Antrieb oder in einfacher Ausführung auch manuell erfolgen kann, in eine in etwa horizontale Stellung gebracht, in der die Innenseite der Heckklappe 9 nach oben weist und ein Arm 45 des Lagerteils 22 gegen einen nicht dargestellten Anschlag, der ebenfalls an der Vertikalführung 16 mit der Heckklappe 9 verfährt, anschlägt. Auf die Heckklappe 9 kann Lagegut gestellt werden, das dann durch motorisches Hochfahren der Heckklappe 9 mittels der Lagereinrichtung auf das Niveau des Bodens 15 des Kofferraums 3 angehoben wird. Das Ladegut wird somit niveaugleich auf den Boden 15 des Kofferraums 3 geschoben, wobei die beiden Gleitladeböden 39 und 40 das Verschieben des Ladeguts unterstützen können.

In der abgesenkten horizontalen Ladestellung kann die Heckklappe 9 auch als Lastenträger wie z. B. als Fahrradträger verwendet werden. Zu diesem Zweck können zusätzliche Halterungen an der Heckklappe 9 und/oder an der heckseitigen Karosserie angebracht werden.

Wenn das Rollo 4 geöffnet ist, bildet der Kofferraum 3 eine offene Ladefläche in der Art eines Pickups. Durch Herabschwenken der Heckklappe 9 auf Höhe der Ladefläche kann diese dementsprechend verlängert werden.

### Bezugszeichenliste

- 1: Personenkraftwagen
- 2: Fahrzeugheck
- 3: Laderaum
- 4: Laderaumtür
- 5: Lamellen
- 6: Führungsschiene
- 7: Kofferraumöffnung
- 8: Oberrand
- 9: Heckklappe
- 10: Wickelwelle
- 11 1: Lehne
- 12: Rücksitz
- 13: Hutablage
- 14: rückseitige Kofferraumöffnung
- 15: Boden
- 16: Vertikalführungseinrichtung
- 17: Führungsschiene
- 18: Führungsschiene
- 19: Heckwand
- 20: Führungsnuten
- 21: Schwenkachse
- 22: Lagerteil
- 23: Gleitschuh
- 24: Unterrand
- 25: Antriebskabel
- 26: Antriebsmotor
- 27: oberer Abschnitt
- 28: Lagerabschnitt
- 29: Ende
- 30: Wasserrinne
- 31: Steg
- 32: Hubschiene
- 33: Kulissenführung
- 34: Zapfen
- 35: Trägerteil
- 36: Antriebskabel
- 37: Regenrinne
- 38: Dichtung
- 39: Gleitladeboden
- 40: Gleitladeboden
- 41: Hinterrand
- 42: Spalt
- 43: Führungsschiene
- 44: Feder
- 45: Arm
- 46: Antriebseinrichtung

## Patentansprüche

1. Kraftfahrzeug, insbesondere Limousine oder Kombi, mit einer Heckklappe, die am Fahrzeug mittels einer Lagereinrichtung zum Schließen und zum Freigeben einer rückseitigen Beladeöffnung eines Fahrzeuginnenraums oder Kofferraums bewegbar gelagert ist,
**dadurch gekennzeichnet**,
die Heckklappe (9) mittels der Lagereinrichtung (16, 26) in einer Senk- bzw. einer Hubbewegung zwischen ihrer Schließstellung und einer abgesenkten Offenstellung, in der sie am Fahrzeugheck (2) in im wesentlichen vertikaler Ausrichtung angeordnet ist, verstellbar ist.

2. Kraftfahrzeug, insbesondere Limousine, mit einem heckseitigen Kofferraum und einer Heckklappe, die am Fahrzeug mittels einer Lagereinrichtung zum Schließen und zum Freigeben einer rückseitigen Beladeöffnung des Kofferraums bewegbar gelagert ist,
**dadurch gekennzeichnet,**
**daß** eine obere Kofferraumöffnung (7) mittels einer Abdeckeinrichtung (4) verschließbar ist, die mehrere beidseits der Kofferraumöffnung (7) verschiebbar gelagerte und in eine Offenstellung nach vorne verschiebbare Abdeckteile (5) aufweist, und
**daß** die Heckklappe (9) in eine horizontale Stellung schwenkbar ist und mittels der Lagereinrichtung (16, 26) zum Anheben und Absenken von Ladegut vertikal bewegbar ist.

3. Kraftfahrzeug nach Anspruch 2,
**dadurch gekennzeichnet, daß** die Heckklappe (9) mittels der Lagereinrichtung (16, 26) in einer Senk- bzw. einer Hubbewegung zwischen ihrer Schließstellung und einer abgesenkten Offenstellung, in der sie am Fahrzeugheck (2) in im wesentlichen vertikaler Ausrichtung angeordnet ist, verstellbar ist.

4. Kraftfahrzeug nach einem der Ansprüche 1 bis 3,
**dadurch gekennzeichnet, daß** die Heckklappe (9) um ihren Unterrand (24) nach hinten ausschwenkbar ist, um eine Lasttragfläche zu bilden.

5. Kraftfahrzeug nach einem der Ansprüche 1 bis 4,
**dadurch gekennzeichnet, daß** die ausgeschwenkte Heckklappe (9) in einer im wesentlichen horizontalen Ausschwenkstellung mittels der Lagereinrichtung (16, 26) in einer Senk- bzw. Hubbewegung als Hubeinrichtung für Ladegut bewegbar ist.

6. Kraftfahrzeug nach einem der Ansprüche 1 bis 5,
**dadurch gekennzeichnet, daß** die Lagereinrichtung (16, 26) eine am Fahrzeug angebrachte Vertikalführungseinrichtung (16, 17, 18) aufweist, an der zumindest ein an der Heckklappe (9) befestigtes Schwenklagerteil (22) verschiebbar und verschwenkbar gelagert ist.

7. Kraftfahrzeug nach Anspruch 6,
**dadurch gekennzeichnet, daß** die Vertikalführungseinrichtung zwei Vertikalführungen aufweist (16) und jede Vertikalführung zumindest eine Führungsschiene (17, 18) enthält.

8. Kraftfahrzeug nach Anspruch 6 oder 7,
**dadurch gekennzeichnet, daß** die Heckklappe (9) bei der Hubbewegung in einem Oberabschnitt (27) jeder Vertikalführung (16, 17, 18) in ihre Schließstellung gegen das Fahrzeugheck (2) bewegt wird.

9. Kraftfahrzeug nach einem der Ansprüche 1 bis 8,
**dadurch gekennzeichnet, daß** eine Antriebseinrichtung (26) mit einem an der Vertikalführung (16) bzw. der Führungsschiene (17, 18) gelagerten Gleitschuh (23) verbunden ist, an dem die Schwenklagereinrichtung (22) für die Heckklappe (9) schwenkbar gelagert ist.

10. Kraftfahrzeug nach einem der Ansprüche 1 bis 9,
**dadurch gekennzeichnet, daß** eine bzw. die obere Abdeckung (4) des Kofferraums (3) bzw. Laderaums aus einer Schließstellung, in der sie eine an den Oberrand (8) der geschlossenen Heckklappe (9) angrenzende obere Kofferraumöffnung (7) verschließt, in eine vorderen Ablagestellung zum Freigeben der oberen Kofferraumöffnung (7) bewegbar ist.

11. Kraftfahrzeug nach Anspruch 10,
**dadurch gekennzeichnet, daß** eine Rolloeinrichtung (4) die obere Abdeckung bildet und auf einer vor der Kofferraumöffnung (7) verdeckt angeordneten Wickelwelle (10) aufwickelbar ist.

12. Kraftfahrzeug nach einem der Ansprüche 1 bis11,
**dadurch gekennzeichnet, daß** die Lamellen (5) der Rolloeinrichtung (4) bzw. die Abdeckteile der Abdeckung an beidseits der oberen Kofferraumöffnung (7) angeordneten Führungen (6) geführt sind und daß an den Führungen (6) Hubleisten (32) vorgesehen sind, die von unten nach oben gegen die Lamellen (5) bzw. die Abdeckteile ausfahrbar sind, um diese gegen einen Lagerabschnitt (28) der jeweiligen Führung (6) zu drücken.

13. Kraftfahrzeug nach einem der Ansprüche 1 bis12,
**dadurch gekennzeichnet, daß** die Heckklappe (9) an ihrer Innenseite einen verschiebbaren Ladeboden (40) aufweist.

14. Kraftfahrzeug nach einem der Ansprüche 1 bis13,
**dadurch gekennzeichnet, daß** am Boden (15) des Kofferraums (3) ein in Fahrzeuglängsrichtung bewegbarer Ladeboden (39) angebracht ist.
